# EUROPEAN PATENT APPLICATION

(11) **EP 3 995 688 A1**
(43) Date of publication of application: **11.05.2022**
(21) Application number: 20205992.9
(22) Date of filing: 05.11.2020
(51) Int. Cl.: F03D 1/06, B29C 70/68, B29L 31/08

(54) **A METHOD OF MANUFACTURING A WIND TURBINE ROTOR BLADE CONNECTION PART HAVING A JOINING SURFACE**

(71) Applicant: Nordex Blade Technology Centre APS, 5771 Stenstrup (DK)
(72) Inventor: SØRENSEN, Flemming, 5700 Svendborg (DK)
(74) Representative: Hauck Patentanwaltspartnerschaft mbB

(57) **Abstract**

A method of manufacturing a wind turbine rotor blade connection part having a joining surface, the method comprising the following steps:
• providing a mould,
• placing a first layer of reinforcing fibres in the mould,
• providing a placeholder comprising a front end and a longitudinal direction,
• positioning the placeholder in the mould on top of the first layer of reinforcing fibres so that the front end is arranged at the joining surface,
• embedding the first layer of a reinforcing fibres and the placeholder in a matrix material,
• curing of the matrix material, so that the placeholder is embedded in a fibrous composite material,
• removing the wind turbine rotor blade connection part from the mould,
• wherein the placeholder is removable from the fibrous composite material, so that at the position of the placeholder a cavity can be formed.

## Description

The invention relates to a method of manufacturing a wind turbine rotor blade connection part having a joining surface and to a wind turbine rotor blade connection part.

The wind turbine rotor blade connection part is a prefabricated part adapted to be integrated into a wind turbine rotor blade part such as, for example, a wind turbine rotor blade shell member or a wind turbine rotor blade spar cap. The wind turbine rotor blade shell member may be a wind turbine rotor blade half shell or a longitudinal section of a wind turbine rotor blade. For connecting a wind turbine rotor blade part to a wind turbine rotor hub as well as for connecting different wind turbine rotor blade parts, in particular longitudinal sections thereof, to each other, it is known to fasten at least one joining element, in particular a bolt or a sleeve, on the wind turbine rotor blade part. To this end, it is known to first manufacture the wind turbine rotor blade part of a fibrous composite material, and to then drill a hole in the joining surface. In a third step, a joining element can be inserted and fastened in the hole.

Following this approach, the document EP 3 150 848 A1 discloses a method of manufacturing a wind turbine rotor blade part. In accordance with the known method, a laminate with circular protrusions is formed. Housings are then machined in a joining surface of the laminate, and joining elements are affixed in the housings with an adhesive.

In the alternative, it is known to integrate the joining elements when forming the fibrous composite material in a manufacturing mould. In this way, the integrity of the reinforcing fibres can be maintained, because no hole needs to be formed in the composite material. The documents WO 2004/110862 A1 and EP 2 358 997 B1 disclose examples of wind turbine rotor blades with joining elements integrated into a laminated structure.

From the document EP 2 647 494 B1 a method of manufacturing a longitudinal section of a wind turbine rotor blade using a so-called joint laminate has become known. The joint laminate is a prefabricated connection part comprising joining elements. It is used as a preform when manufacturing the longitudinal section of the wind turbine rotor blade.

From the document DE 10 2005 047 959 B4 a method of manufacturing a wind turbine rotor blade with a through-hole has become known. Reinforcing fibres of a fibre mat are rearranged such that a region without fibres is created. In this region, a body may be placed before embedding the reinforcing fibres in a matrix material. Later, the body may be removed or provided with a bore, so that a through-hole is formed.

From the document DE 10 2013 109 995 B4 a method of manufacturing a fibrous composite material component with a through-hole has become known. Reinforcing fibres of a fibre mat are rearranged such that a region without fibres is created. In this region, a placeholder is placed before curing of a matrix material. After the matrix material has cured, the placeholder is drilled out in order to form a through-hole.

It is an object of the invention to provide a method of manufacturing a wind turbine rotor blade connection part having a joining surface, and a wind turbine rotor blade connection part, wherein the wind turbine rotor blade connection part allows for simple and reliable anchoring of a joining element.

This object is solved by the method of manufacturing a wind turbine rotor blade connection part having a joining surface of claim 1 and by the wind turbine rotor blade connection part of claim 15. Aspects of the invention are given in the dependent claims.

The method of claim 1 is for manufacturing a wind turbine rotor blade connection part having a joining surface and comprises the following steps:
- providing a mould,
- placing a first layer of a reinforcing fibres in the mould,
- providing a placeholder comprising a front end and a longitudinal direction,
- positioning the placeholder in the mould on top of the first layer of reinforcing fibres so that the front end is arranged at the joining surface,
- embedding the first layer of a reinforcing fibres and the placeholder in a matrix material,
- curing of the matrix material, so that the placeholder is embedded in a fibrous composite material,
- removing the wind turbine rotor blade connection part from the mould,
- wherein the placeholder is removable from the fibrous composite material, so that at the position of the placeholder a cavity can be formed.

The wind turbine rotor blade connection part is intended for use as a root connection of wind turbine rotor blade to a hub of a wind turbine rotor or as a connection of a wind turbine rotor blade segment to another rotor blade segment. The fastening of the wind turbine rotor blade to the hub or of the wind turbine rotor blade segments to each other can be realized by means of joining elements, in particular sleeves, for example sleeves with a threaded bore, and/or bolts. These joining elements are anchored in the wind turbine rotor blade connection part when the placeholder embedded in the composite laminate of the wind turbine rotor blade connection part is removed and replaced with a joining element. The longitudinal direction of the placeholder of the wind turbine rotor blade connection part can correspond to a longitudinal direction of the wind turbine blade connection part, and, ultimately, to a longitudinal direction of the wind turbine blade for which the wind turbine rotor blade connection part is used. The joining surface can be arranged substantially perpendicular to the longitudinal direction of the placeholder and/or of the wind turbine rotor blade connection part.

The shape and size of the mould depend on the type of the wind turbine rotor blade part into which the wind turbine rotor blade connection part shall be integrated. The mould may have a forming surface at which the joining surface of the wind turbine rotor blade part is formed. It may have another forming surface which corresponds to an aerodynamic surface of the wind turbine rotor blade part. An open mould or a closed mould may be used.

The first layer of reinforcing fibres may comprise any suitable fibre type, for example glass fibres or carbon fibres, or a mixture of these, also in combination with any other fibre types. Placing the first layer of reinforcing fibres in the mould can be done in any suitable way, in particular in at least one lower layer arranged underneath the placeholder fibre mats of any suitable type, fibre rovings or, if desired, larger prefabricated structures including the first layer may be used.

The placeholder may have any suitable shape, for example cylindrical or conical, so that it corresponds to the shape of a joining element with which the placeholder shall be replaced.

The placeholder is positioned in the mould so that the front end is arranged at the joining surface. To this end, a forming surface of the mould corresponding to the joining surface may have a positioning means for positioning the placeholder. For example, the placeholder may have a threaded bore and the mould may have a flange with a through hole, so that the placeholder can be held in place with a bolt guided through the through hole and screwed into the threaded bore of the placeholder. In the alternative or in addition, the placeholder may be held in place by means of other elements placed within the mould, in particular by the first layer of reinforcing fibres and/or by foam cores placed within the mould.

The placeholder is positioned in the mould on top of the first layer of reinforcing fibres. This means the placeholder is arranged on an inner side of the first layer. The placeholder may be arranged in direct contact with the first layer, but it is also possible to place any other materials between the first layer and the placeholder, in particular any number of additional layers of reinforcing material or core material. The longitudinal direction of the placeholder may be arranged parallel to a (tangent) plane of the first layer.

The first layer of reinforcing fibres and the placeholder (and possibly any other layers of reinforcing fibres or materials placed in the mould) are embedded in a matrix material. The matrix material may be a polyester or epoxy resin, for example. It may be applied by any suitable technique, for example vacuum infusion. It may also be applied by hand as in traditional hand layup techniques, or by using pre-impregnated fibre materials (prepregs).

After the matrix material has cured, the first layer of reinforcing fibres and any other material positioned within the mould and the cured matrix material form a fibrous composite material in which the placeholder is embedded. For a good load transfer, the first layer of reinforcing fibres or a part thereof may be positioned in a vicinity of the placeholder.

The steps of the method need not be executed in the given order. In particular, the step of removing the wind turbine rotor blade part from the mould can be carried out as soon as the matrix material has cured at least partially, no matter whether the placeholder is still in place or has already been replaced with a joining element, as will be described in greater detail below.

It is an advantage of the invention that it is particularly easy to integrate a joining element into the wind turbine rotor blade connection part by removing the placeholder and replacing it with the joining element. To this end, the placeholder can simply be removed from the fibrous composite material. If desired, this may be done e.g. by drilling out the placeholder. To this end, the placeholder may consist of a relatively soft material, such a foam material, in particular a foam material having closed cells, or of any other material that can easily be removed by any other destructive process. In the alternative, the placeholder may be removable in one piece, in particular by pulling the placeholder out of the fibrous composite material. To this end, the placeholder may have a non-bonding surface. For example, the placeholder may comprise a PTFE (polytetrafluoroethylene) material or any other material having corresponding surface characteristics.

Once the placeholder has been removed, the layout of the fibrous composite material accounts for the position of the joining elements, in particular in that the first layer of reinforcing fibres is placed adjacent the joining element, so that a stable connection can be made. Moreover, the fibre structure of the fibrous composite material remains intact and none of the reinforcing fibres needs to be damaged, as is the case in solid fibrous composite materials into which a hole for a joining element is drilled. Another advantage is that integrating the joining element into the wind turbine rotor blade connection part can be carried out in a separate, well-controlled process, if desired after having removed the wind turbine rotor blade connection part from the mould or a wind turbine rotor blade part into which the wind turbine rotor blade connection part has been integrated from a manufacturing mould. This reduces the mould cycle time, which leads to a bigger amount of wind turbine rotor blades, rotor blade segments or prefabricated rotor blade connection parts manufactured in the mould.

The wind turbine rotor blade part may be provided with any number of placeholders, for example with only one, two, three or more than three placeholders. Each of the placeholders is embedded in the fibrous composite material and is removable from the fibrous composite material.

According to an aspect, the placeholder comprises an elongated core and an outer layer, wherein the outer layer is adapted such that the core can be pulled out of the fibrous composite material. In particular, pulling out the core can be done in a direction towards the front end of the placeholder, out of the joining surface. The outer layer limits the pulling force required for pulling out the core to an acceptable level, so that the placeholder can be pulled out of the fibrous composite material without significantly damaging the core or the fibrous composite material. The outer layer is designed such that no stable bond between the matrix material and the core of the placeholder is formed when curing the matrix material.

According to an aspect, the placeholder comprises a distal end away from the front end, and the fibrous composite material covers the distal end. The placeholder may be embedded in the fibrous composite material in all directions apart from its front end side. A cavity remaining in the fibrous composite material after having removed the placeholder/the core will thus have solid side surfaces and a closed bottom. This facilitates an optimal bond with a joining element later inserted into the cavity.

According to an aspect, the outer layer comprises a release agent. In particular, the outer layer may consist of the release agent, which is simply applied to an outer surface of the core. The release agent prevents a strong bond being formed between the matrix material and the core. In the alternative, the outer layer may be formed by an outer surface of the core itself, provided the properties of this surface are such that no stable bond with the matrix material will be formed. Alternatively, the outer layer can be a layer of peel ply, which can be removed simultaneously with pulling the core out of the fibrous composite material or afterwards. After removing the peel ply, the inner walls of the bore are ready for the bonding to a joining element.

According to an aspect, the outer layer comprises a sacrificial material, in particular a foam material. The foam material may have open cells or closed cells. When pulling the core out of the fibrous composite material, the sacrificial material will be destroyed. A part of the sacrificial material may remain attached to the fibrous composite material, while another part of the sacrificial material may be pulled out of the fibrous composite material together with the core. A foam material with closed cells is a suitable choice because the (liquid) matrix material will not penetrate the outer layer of such a foam material, while the internal stability of the foam material is low enough so that the layer can be torn apart when applying sufficient pulling force. Alternatively, the sacrificial material can be soluble to water or other liquids. In this case, the sacrificial material can be brought into contact with the water or the liquid, which e.g. can be infused through openings in the core. For removing the placeholder, the outer layer of the sacrificial material may be weakened or at least partly removed by applying a suitable solvent, in particular before pulling the core out of the fibrous material.

According to an aspect, the core is a solid metal core, in particular a solid aluminium core. A solid metal core is durable enough so that it can be used many times. Using aluminium is of particular advantage because of its large thermal expansion coefficient. When curing the matrix material, the part will typically be at an elevated temperature. When cooling down, the core will shrink, so that it can be pulled out of the fibrous composite material more easily. This is particularly true in combination with an outer layer consisting essentially of a release agent. Another suitable metal for the solid core is steel.

According to an aspect, the core comprises at the front end an opening for fastening a pulling tool to the core. In particular, the opening may comprise a threaded bore. By means of a corresponding pulling tool, it is particularly easy to pull out the core. In a preferred embodiment, the opening having the threaded bore is the same opening which is used for securing the placeholder to the mould. Alternatively, when embedding the placeholder in the matrix material, it is an option to close the opening of the core, for example with a plug. After the matrix material has cured, the opening may be reopened, so that the pulling tool can be applied.

According to an aspect, the method comprises the following additional step:
- wrapping the placeholder in a circumferential layer of reinforcing fibres.

In particular, the placeholder may be wrapped in the circumferential layer before positioning the placeholder in the mould. If desired, more than one layer of reinforcing fibres may be wrapped around the placeholder.

According to an aspect, the method comprises the following additional step:
- placing a second layer of reinforcing fibres in the mould on top of the placeholder, wherein the second layer of reinforcing fibres is embedded in the matrix material.

The second layer of reinforcing fibres may be applied in the form of fibre mats with the reinforcing fibres aligned in any desired direction. By using top and bottom layers as described, a compact and stable part can be obtained, with the placeholders safely held between the various fibre layers.

According to an aspect, the first layer of reinforcing fibres, the second layer of reinforcing fibres and/or the circumferential layer of reinforcing fibres comprises or consists of reinforcing fibres substantially aligned with the longitudinal direction of the placeholder. A layer consisting of such aligned fibres is also referred to as a unidirectional layer. In a preferred embodiment, the wind turbine blade connection part comprises a first, a second and a circumferential layer each consisting of unidirectional reinforcing fibres. The aligned reinforcing fibres may be aligned with the longitudinal direction of the wind turbine rotor blade part into which the wind turbine rotor blade part is integrated. This means that forces acting on a joining element later integrated into the rotor blade connection part in place of the placeholder can be transferred into the wind turbine rotor blade part in an efficient manner. To this end, no perfect alignment of the reinforcing fibres with the longitudinal direction is required. It may be sufficient if the reinforcing fibres are substantially aligned with the longitudinal direction or if only a part of the reinforcing fibres are substantially aligned with the longitudinal direction. It is noted that the wind turbine rotor blade connection part may comprise additional layers of reinforcing fibres arranged in different directions.

According to an aspect, the method comprises the following additional step:
- placing a conical foam element at a distal face of the placeholder, wherein the conical foam element is embedded in the matrix material.

The foam element together with the placeholder may form a continuously shaped body that tapers in the direction away from the front end of the placeholder. This helps arranging adjacent reinforcing fibres along substantially straight lines, ideal for transferring loads into the fibrous composite material. In a preferred embodiment, the conical foam element may be attached to the placeholder before positioning both parts in the mould. Both parts together can be wrapped with a layer of reinforcing fibres.

According to an aspect, the method comprises the following additional steps:
- removing the placeholder from the fibrous composite material, so that at the position of the placeholder, a cavity is formed.

This step may be carried out either before or after removing the wind turbine rotor blade part from the mould. In both cases, it may be desired to remove the placeholder just before the same shall be replaced with a joining element.

According to an aspect, the method comprises one or both of the following additional steps:
- machining and/or cleaning of the cavity,
- inserting and fastening a joining element in the cavity.

The joining element may be, in particular, a bolt or a cylindrical or conical sleeve, the sleeve in particular comprising a threaded bore. The placeholder has a shape corresponding to an outer shape of the joining element, so that the same can conveniently be placed within the cavity formed when removing the placeholder from the fibrous composite material. It is noted that the additional steps can be performed after removing the wind turbine rotor blade connection part from the mould, or while the wind turbine rotor blade connection part still is within the mould. For fastening the joining element in the cavity, an adhesive can be applied to the surface of the cavity and/or to the surface of the joining element. For obtaining a stable bond when adhesively fastening the joining element, it is important to prepare the cavity such that it has a clean and active surface. To this end, any remainder of the outer layer, in particular of a release agent, needs to be removed. If desired, the additional step may comprise removing a thin layer of the fibrous composite material next to the surface of the cavity.

According to an aspect, the invention relates to a method of manufacturing a wind turbine rotor blade part comprising the following steps:
- manufacturing a wind turbine rotor blade connection part in accordance with the method of any of the claims 1 to 13,
- integrating the wind turbine rotor blade connection part in a wind turbine rotor blade part, wherein the wind turbine rotor blade part is either (i) a wind turbine rotor blade shell member comprising an aerodynamic surface and a connection surface, wherein the joining surface forms at least a part of the connection surface, or (ii) a wind turbine rotor blade spar cap comprising a connection surface, wherein the joining surface forms at least a part of the connection surface.

The joining surface of the wind turbine rotor blade shell member is adapted for being connected to a wind turbine rotor hub or to another wind turbine rotor blade shell member of another longitudinal section of a wind turbine rotor blade. The joining surface of the wind turbine rotor blade spar cap is adapted for being connected to a wind turbine rotor hub or to another wind turbine rotor blade spar cap. The joining surface of the wind turbine rotor blade spar cap segment is adapted for being connected to a wind turbine rotor hub or to another wind turbine rotor blade spar cap segment. The wind turbine rotor blade shell member can be a rotor blade half shell extending from a blade root towards a blade tip, or a longitudinal segment of such a half shell. The wind turbine rotor blade shell member may also be any other longitudinal segment of a wind turbine rotor blade. The step of integrating the wind turbine rotor blade connection part into the wind turbine rotor blade part can be carried out before or after removing the placeholder from the fibrous composite material.

The above object is also solved by the wind turbine rotor blade part of claim 15. The wind turbine rotor blade part comprises:
- a joining surface,
- a fibrous composite material comprising a first layer of reinforcing fibres and a cured matrix material, wherein the first layer of reinforcing fibres has an outer side facing towards an outer surface of the wind turbine connection part and an opposite inner side,
- a placeholder comprising a front end and a longitudinal direction,
- wherein the placeholder is embedded in the fibrous composite material such that the front end is positioned at the joining surface and the placeholder is arranged at the inner side of the first layer of first reinforcing fibres,
- wherein the placeholder is removable from the fibrous composite material, so that at the position of the placeholder a cavity can be formed.

Regarding the features and advantages of the wind turbine rotor blade connection part, reference is made to the above explanations of the corresponding method, which apply respectively. The wind turbine rotor blade connection part may be designed in accordance with the various aspects of the method, for example, with regard to the type of a wind turbine rotor blade part and to the specific solutions for the outer layer, etc. In particular, the longitudinal direction of the placeholder can be positioned with reference to the first layer of reinforcing fibres and with reference to a longitudinal direction of the wind turbine rotor blade connection part as has been explained with regard to the method.

In the following, the invention is explained in greater detail based on embodiments shown in drawings.
- Fig. 1: shows a wind turbine rotor blade according to the prior art in a schematic, perspective view,
- Fig. 2: shows a cross section of a wind turbine rotor blade part according to the prior art,
- Fig. 3: shows a section of a wind turbine rotor blade connection part in a mould, in cross-section close to a blade root,
- Fig. 4: shows another section of a wind turbine rotor blade connection part in cross-section,
- Fig. 5: shows a placeholder of a wind turbine rotor blade connection part in a longitudinal section,
- Fig. 6: shows another placeholder of a wind turbine rotor blade connection part with a conical foam element in a longitudinal section,
- Fig. 7: shows a prefabricated wind turbine rotor blade connection part in a perspective view at three different stages of the inventive method,
- Fig. 8: shows a first longitudinal section of a wind turbine rotor blade comprising a wind turbine rotor blade connection part,
- Fig. 9: shows a second longitudinal section of a wind turbine rotor blade comprising a wind turbine rotor blade connection part,
- Fig. 10: shows two wind turbine rotor blade connection parts connected to each other,
- Fig. 11: shows two wind turbine rotor blade connection parts connected to each other and inserted in a rotor blade half shell,
- Fig. 12: shows two wind turbine rotor blade parts each having wind turbine rotor blade connection part.

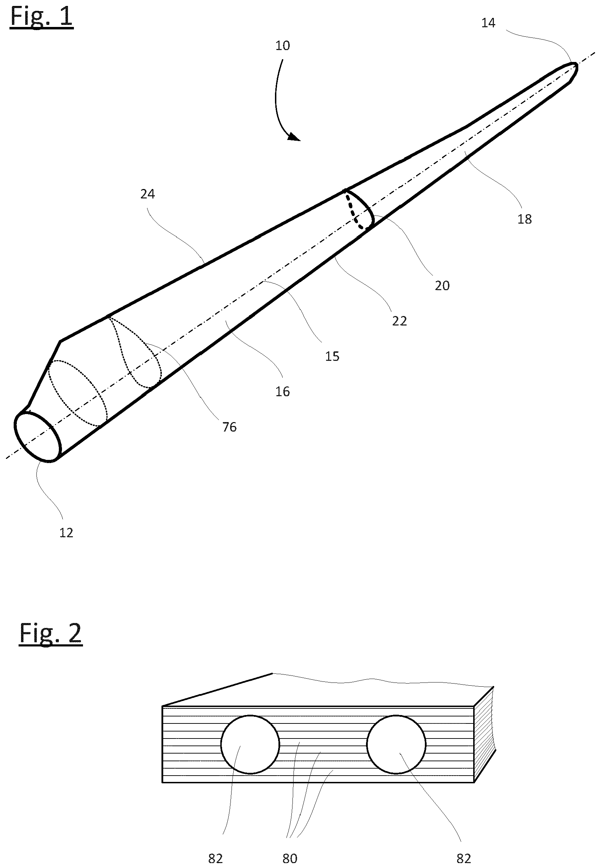

The wind turbine rotor blade 10 of figure 1 has a blade root 12 and a blade tip 14. At the blade root 12, the wind turbine rotor blade 10 has a circular cross-section, which towards the blade tip 14 transforms into an aerodynamic profile 76.

The wind turbine rotor blade 10 is divided into two longitudinal sections, a first longitudinal section 16 comprising the rotor blade root 12 and a second longitudinal section 18 comprising the rotor blade tip 14. Both longitudinal sections 16 and 18 are connected to each other at a segmentation plane 20, which is oriented perpendicular to a longitudinal axis 15 of the wind turbine rotor blade 10.

Each of the longitudinal sections 16, 18 may comprise two or more wind turbine rotor blade shell members, in particular a first half shell member comprising a pressure side and a second half shell member comprising a suction side. These half shell members may be adhered to each other along a leading edge 22 and a trailing edge 24 of the wind turbine rotor blade 10.

When manufacturing the wind turbine rotor blade 10 of figure 1, joining elements (not shown in Fig. 1) can be positioned at the blade root 12, where the first longitudinal section 16 or its half shell members form a joining surface for connecting the wind turbine rotor blade 10 to a rotor hub. Joining elements may also be integrated in the first longitudinal section 16 and/or in the second longitudinal section 18 or in their corresponding half shell members, where these elements are connected to each other with respective joining surfaces at the segmentation plane 20. These joining elements, e.g. inserts in the form of sleeves, can be embedded into the laminate by infusion or glued into respective boreholes by means of an adhesive.

Figure 2 shows a part of a laminate of a wind turbine rotor blade part according to the state of the art (shown in cross section). One can see a plurality of layers 80 of reinforcing fibres forming together with the infused and cured resin a fibrous composite material. Two bore holes 82 are drilled into the fibrous composite material. Thereby the integrity of the reinforcing fibres in the fibre layers 80 is destroyed. Joining elements (not shown) can be inserted and glued into the bore holes 82.

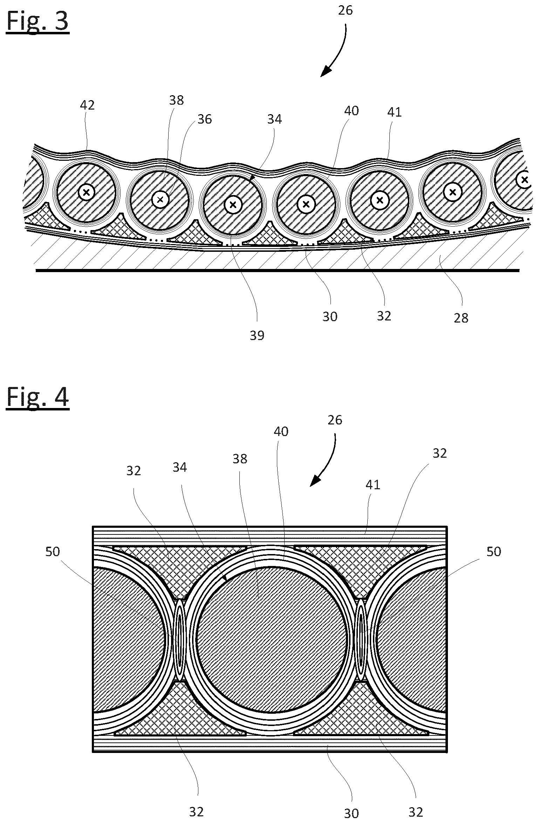

According to the invention, a wind turbine rotor blade connection part 26 is prefabricated comprising placeholders 34 integrated into the fibrous composite material of the wind turbine rotor blade connection part 26. Figure 3 shows this in greater detail. In this specific example, the wind turbine rotor blade connection part 26 later forms a part of a blade root 12. However, placeholders 34 may be used in the same manner in any other wind turbine rotor blade connection parts 26.

The wind turbine rotor blade connection part 26 in Fig. 3 is shown in a mould 28. When manufacturing the wind turbine rotor blade connection part 26, as a bottom layer (possibly placed on top of additional layers not explained in detail, such as a surface layer or a peel ply, etc.) a first layer 30 of reinforcing fibres is arranged. On top of this first layer 30, a series of substantially triangular profiles 32 of a lightweight core material such as a foam material have been arranged. Also on top of the first layer 30 and between each two of these profiles 32, a placeholder 34 is positioned. Each placeholder 34 has an elongate, cylindrical solid metal core 38 with a circular cross-section and comprising a central opening 36 for fastening the core 38 to a pulling tool. The placeholders 34 comprise an outer layer formed by a release agent 39 applied to an outer surface of the elongated core 38. Each of the placeholders 34 has a front end facing the viewer. A longitudinal direction of the placeholders 34 and of the elongated cores 38 is arranged perpendicular to the drawing plane.

Each of the placeholders 34 is surrounded by a circumferential layer 40 of reinforcing fibres, which are substantially aligned with the longitudinal direction. These circumferential layers 40 of reinforcing fibres are schematically shown, they fill the space shown in white between each pair of adjacent placeholders 34, between the profiles 32 and adjacent placeholders 34, and between the layer 30 and the placeholders 34 placed on top thereof, as well as on top of the placeholders 34. A second layer of reinforcing fibres 41 is placed on top of the placeholders 34 forming an inner surface 42 of the wind turbine rotor blade connection part 26, wherein the inner surface 42 has an undulated shape.

Figure 4 shows a smaller section of another wind turbine rotor blade connection part 26 shown in cross section. One can see as bottom layers some first layers 30 of reinforcing fibres and as top layers some second layers 41 of reinforcing fibres. In the middle, one can see a placeholder 34 with a core 38 having a cylindrical shape with circular cross section. In this embodiment the core is made of a foam material, which can be removed later by drilling or by means of chemical agents. As in Fig. 3, the longitudinal direction of the elongated core 38 runs perpendicular to the drawing plane. The placeholder 34 is wrapped in several circumferential layers 40 of reinforcing fibres which are aligned with the longitudinal direction of the elongated core 38.

Between adjacent placeholders 38, additional fibre material 50 is placed. Between the placeholders 34 wrapped in the circumferential layers 40 of reinforcing fibres and the first and second layers 30, 41 of the reinforcing fibres, four substantially triangular profiles 32 of a lightweight core material are positioned.

It is noted that the first layers 30 (bottom layers) and the second layers 41 (top layers) of reinforcing fibres are in contact with the circumferential layers 40 of reinforcing fibres, and that the circumferential layers 40 of reinforcing fibres are in contact with the additional fibre material 50 arranged between each pair of adjacent placeholders 34. This makes it easy to embed all of the mentioned elements in a matrix material, for example applying a vacuum infusion process.

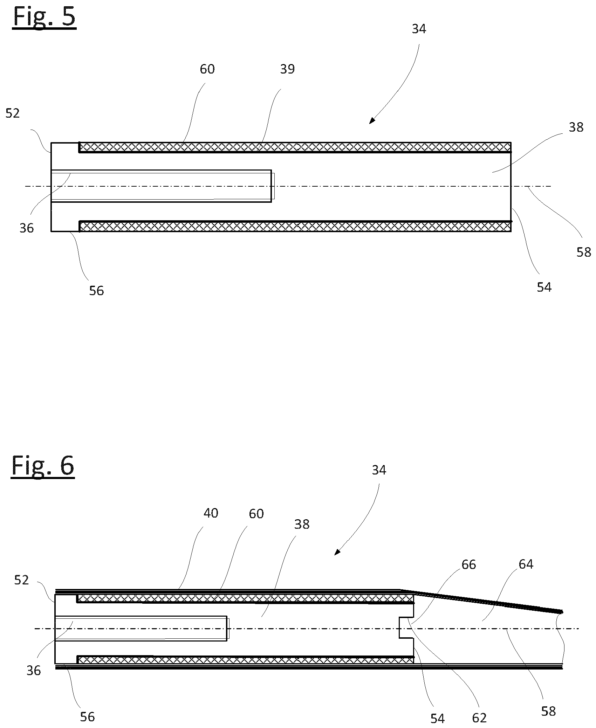

Figure 5 shows a placeholder 34 in a preferred embodiment in a longitudinal section. It has an elongated core 38 of solid metal, which is circular in cross section. The elongated core 38 has a front end 52 and a distal end 54. At the front end 52, the elongated core 38 has a small, outwardly pointing collar 56. The elongated core 38 has a longitudinal axis 58 and an opening 36 in the form of a threaded bore beginning at the front end 52 and extending along the longitudinal axis 58 for about half the length of the elongated core 38. Except for the front end 52 with its collar 56, the elongated core 38 is surrounded by an (optional) outer layer formed of a release agent 39 and an outer layer of a sacrificial material 60 consisting of a foam material with closed cells.

Figure 6 shows another placeholder 34 with an elongated core 38, an opening 36 and a sacrificial material 60 similar to the one of figure 5. The elongated core 38 of figure 6 differs in that it has a second opening 62 at its distal end 54. At this distal end 54, a conical foam element 64 is positioned, with a pin-shaped extension 66 inserted into the second opening 62 for aligning the conical foam element 64 with the placeholder 34.

The placeholder 34 and the conical foam element 64 are wrapped in several circumferential layers 40 of reinforcing fibres. These reinforcing fibres are substantially aligned with the longitudinal axis 58. When these circumferential layers 40 of reinforcing fibres and the placeholder 34 with the conical foam element 64 are integrated in a wind turbine rotor blade connection part 26, the circumferential layers 40 of reinforcing fibres and the conical foam element 64 will become parts of a fibrous composite material into which the placeholder 34 is embedded.

A pulling tool (not shown) can be fastened in the opening 36 and the elongated core 38 can be pulled out of the fibrous composite material. When doing so, the sacrificial material 60 will be torn apart. A cavity for inserting a joining element will remain.

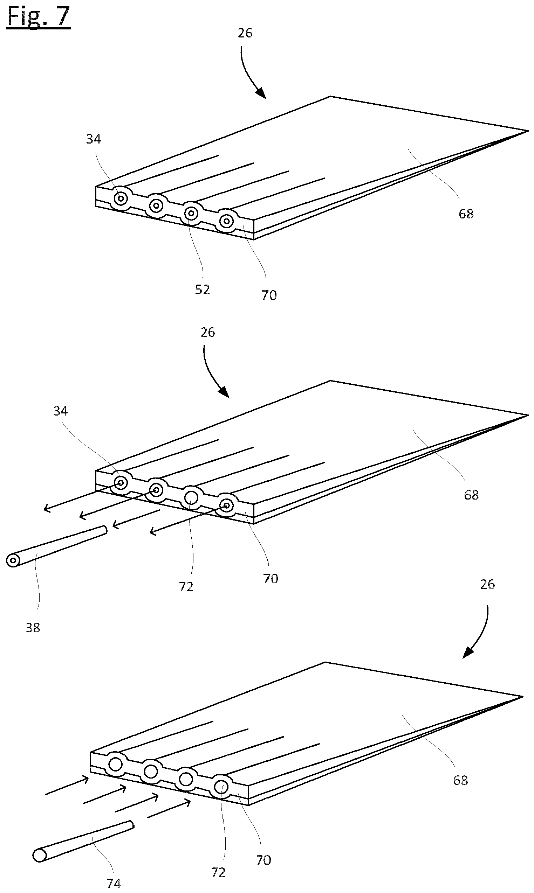

Figure 7 shows the wind turbine rotor blade connection part 26 in the form of a prefabricated joining block 68. The prefabricated joining block 68 is substantially wedge-shaped and has a joining surface 70. In the upper part of Fig. 7, four placeholders 34 are embedded in the fibrous composite material of the prefabricated joining block 68, with their front ends 52 arranged at the joining surface 70.

In the middle part of Fig. 7, one can see that an elongated core 38 of one of the placeholders 34 has been pulled out of the fibrous composite material in the direction of the arrows, that is towards the front end 52 of the placeholder 34. A cavity 72 remains.

The bottom part of Fig. 7 shows the prefabricated wind turbine rotor blade connection part 26 in form of a joining block 68 after all of the placeholders 34 have been pulled out and after the cavities 72 have been machined and/or cleaned. It is also illustrated that a joining element 74, which has a shape corresponding to the shape of the placeholder 34, is inserted into one of the cavities 72, where it is fastened by means of an adhesive.

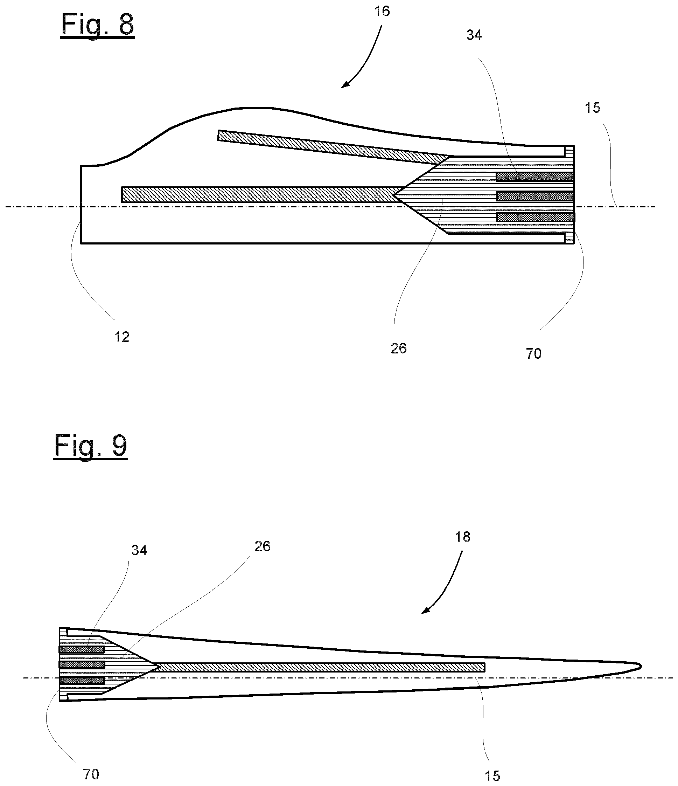

Figure 8 shows a first longitudinal section 16 of a wind turbine rotor blade 10 comprising a wind turbine rotor blade connection part 26. The first longitudinal section 16 is located at the blade root-side end 12. The wind turbine rotor blade connection part 26 is inserted in the shell when manufacturing of the first longitudinal section 16. It is placed into the mould between different layers of fibre reinforced material and, if applicable, other prefabricated parts. After infusion and curing of the resin the wind turbine rotor blade connection part 26 becomes an integral part of the rotor blade shell.

Figure 9 shows a second longitudinal section 18 of a wind turbine rotor blade 10 comprising a wind turbine rotor blade connection part 26. The second longitudinal section 18 is located at the blade tip-side end 14. The integration of the wind turbine rotor blade connection part 26 is carried out in the same way as for the first longitudinal section 16.

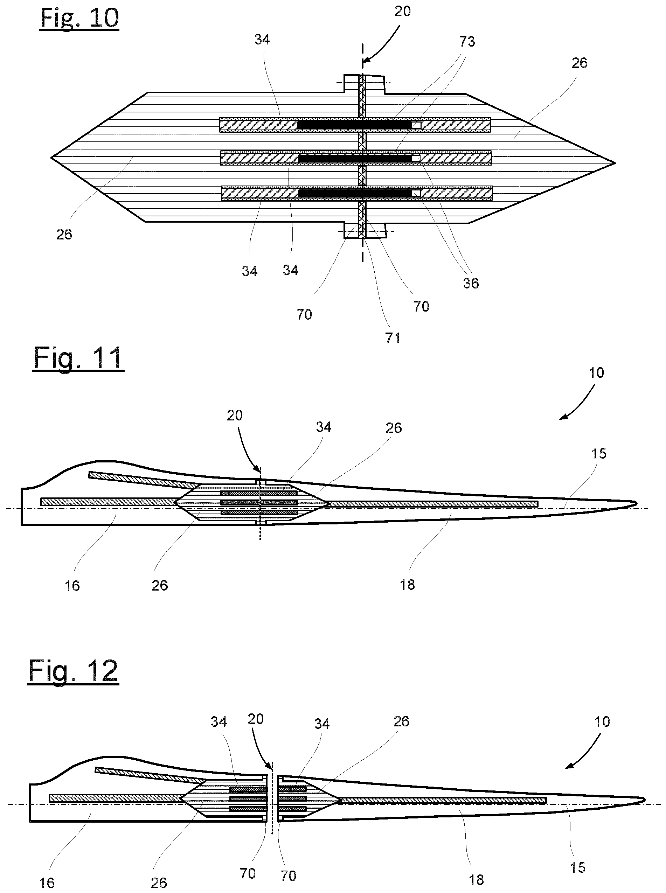

Figure 10 shows two wind turbine rotor blade connection parts 26 connected to each other. For manufacturing a shell or a half shell of a segmented rotor blade in one piece extending from the blade root 12 to the blade tip 14, it is foreseen to provide the wind turbine rotor blade connection parts 26 in a connected manner. To this end, the wind turbine rotor blade connection parts 26 can be arranged with their joining surfaces 70 facing each other, so that the respective placeholders 34 are aligned. Between the two wind turbine rotor blade connection parts 26 a spacer 71 is provided. The spacer 71 defines the segmentation plane 20 and is made from foam or another suitable plastics material. The two wind turbine rotor blade connection parts 26 are aligned by threadless bolts 73, made of a wooden or plastics material, which are inserted into the openings 36 of the respective placeholders 34. The two wind turbine rotor blade connection parts 26 are braced by screw connections at the edges of the connection parts 26. Alternatively, they can be connected by laminating one or more layers of glass fibre laminate over the connection area.

Figure 11 shows two wind turbine rotor blade connection parts 26 connected to each other and integrated in a rotor blade half shell when manufacturing of the half shell. The connection parts 26 have become an integral part of the half shell of the rotor blade 10. The spacer 71 defines the segmentation plane 20 along which the wind turbine rotor blade 10 is divided after manufacturing and assembling both half shells together. The rotor blade 10 can be divided by sawing or by another suitable method.

Figure 12 shows the two wind turbine rotor blade sections 16, 18 having wind turbine rotor blade connection parts 26 after dividing the wind turbine rotor blade 10 along the segmentation line 20.

It is noted that the steps explained with reference to figures 8 to 12 can be carried out for wind turbine rotor blades divided into more than two longitudinal sections in the same manner. The steps can also be carried out independently of the specific shapes of the wind turbine rotor blade 10 and the wind turbine rotor blade connection parts 26 shown in these figures.

### List of reference numerals

- 10: wind turbine rotor blade
- 12: blade root
- 14: blade tip
- 15: longitudinal axis
- 16: first longitudinal section
- 18: second longitudinal section
- 20: segmentation plane
- 22: leading edge
- 24: trailing edge
- 26: wind turbine rotor blade connection part
- 28: mould
- 30: first layer of reinforcing fibres
- 32: profile
- 34: placeholder
- 36: opening
- 38: elongated core
- 39: release agent
- 40: circumferential layer of reinforcing fibres
- 41: second layer of reinforcing fibres
- 42: inner surface
- 50: fibre material
- 52: front end
- 54: distal end
- 56: collar
- 58: longitudinal axis
- 60: sacrificial material
- 62: second opening
- 64: conical foam element
- 66: pin-shaped extension
- 68: prefabricated joining block
- 70: joining surface
- 71: spacer
- 72: cavity
- 73: threadless bolt
- 74: joining element
- 76: aerodynamic profile
- 80: layer of reinforcing fibres
- 82: bore holes

## Claims

1. A method of manufacturing a wind turbine rotor blade connection part (26) having a joining surface (70), the method comprising the following steps:
• providing a mould (28),
• placing a first layer (30) of reinforcing fibres in the mould (28),
• providing a placeholder (34) comprising a front end (52) and a longitudinal direction (58),
• positioning the placeholder (34) in the mould (28) on top of the first layer (30) of reinforcing fibres so that the front end (52) is arranged at the joining surface (70),
• embedding the first layer (30) of reinforcing fibres and the placeholder (34) in a matrix material,
• curing of the matrix material, so that the placeholder (34) is embedded in a fibrous composite material,
• removing the wind turbine rotor blade connection part (26) from the mould (28),
• wherein the placeholder (34) is removable from the fibrous composite material, so that at the position of the placeholder (34) a cavity (72) can be formed.

2. The method of claim 1, wherein the placeholder (34) comprises an elongated core (38) and an outer layer, wherein the outer layer is adapted such that the core (38) can be pulled out of the fibrous composite material.

3. The method of claim 1 or 2, wherein the placeholder (34) comprises a distal end (54) away from the front end (52), and the fibrous composite material covers the distal end (54).

4. The method of claim 2 or 3, wherein the outer layer comprises a release agent (39).

5. The method of any of the claims 2 to 4, wherein the outer layer comprises a sacrificial material (60), in particular a foam material having closed cells.

6. The method of any of the claims 2 to 5, wherein the core (38) is a solid metal core, in particular a solid aluminium core.

7. The method of any of the claims 2 to 6, wherein the core (38) comprises at the front end (52) an opening (36) for fastening a pulling tool to the core (38).

8. The method of any of the claims 1 to 7, comprising the following additional step:
• wrapping the placeholder (34) in a circumferential layer (40) of reinforcing fibres.

9. The method of any of the claims 1 to 8, comprising the following additional step:
• placing a second layer (41) of reinforcing fibres in the mould (28) on top of the placeholder (34), wherein the second layer (41) of reinforcing fibres is embedded in the matrix material.

10. The method of any of the claims 1 to 9, wherein the first layer (30) of reinforcing fibres, the second layer (41) of reinforcing fibres and/or the circumferential layer (40) of reinforcing fibres comprises or consists of reinforcing fibres substantially aligned with the longitudinal direction of the placeholder (34).

11. The method of any of the claims 1 to 10, comprising the following additional step:
• placing a conical foam element (64) at a distal face of the placeholder (34), wherein the conical foam element (64) is embedded in the matrix material.

12. The method of any of the claims 1 to 11, comprising the following additional step:
• removing the placeholder (34) from the fibrous composite material, so that at the position of the placeholder (34), a cavity (72) is formed.

13. The method of claim 12, comprising one or both of the following additional steps:
• machining and/or cleaning of the cavity (72),
• inserting and fastening a joining element (74) in the cavity (72).

14. A method of manufacturing a wind turbine rotor blade part comprising the following steps:
• manufacturing a wind turbine rotor blade connection part (26) in accordance with the method of any of the claims 1 to 13,
• integrating the wind turbine rotor blade connection part (26) in a wind turbine rotor blade part, wherein the wind turbine rotor blade part is either (i) a wind turbine rotor blade shell member comprising an aerodynamic surface and a connection surface, wherein the joining surface (70) forms at least a part of the connection surface, or (ii) a wind turbine rotor blade spar cap or spar cap segment comprising a connection surface, wherein the joining surface (70) forms at least a part of the connection surface.

15. A wind turbine rotor blade connection part (26) comprising
• a joining surface (70),
• a fibrous composite material comprising a first layer (30) of reinforcing fibres and a cured matrix material, wherein the first layer (30) of reinforcing fibres has an outer side facing towards an outer surface of the wind turbine rotor blade connection part (26) and an opposite inner side,
• a placeholder (34) comprising a front end (52) and a longitudinal direction (58),
• wherein the placeholder (34) is embedded in the fibrous composite material such that the front end (52) is positioned at the joining surface (70) and the placeholder (34) is arranged at the inner side of the first layer (30) of reinforcing fibres,
• wherein the placeholder (34) is removable from the fibrous composite material, so that at the position of the placeholder (34) a cavity (72) can be formed.
